# EUROPEAN PATENT APPLICATION

(11) **EP 4 468 414 A1**
(43) Date of publication of application: **27.11.2024**
(21) Application number: 22922222.9
(22) Date of filing: 27.12.2022
(51) Int. Cl.: H01M 4/48, H01M 4/36

(54) **NEGATIVE ELECTRODE ACTIVE MATERIAL FOR NONAQUEOUS ELECTROLYTE SECONDARY BATTERIES, AND METHOD FOR PRODUCING SAME**

(30) Priority: 19.01.2022 JP 2022006556
(71) Applicant: SHIN-ETSU CHEMICAL CO., LTD., Tokyo 1000005 (JP)
(72) Inventor: TAKAHASHI, Kohta, Annaka-shi, Gunma 379-0125 (JP); HIROSE, Takakazu, Annaka-shi, Gunma 379-0125 (JP); ISHIKAWA, Takuya, Annaka-shi, Gunma 379-0125 (JP); OSAWA, Yusuke, Annaka-shi, Gunma 379-0125 (JP); MURAYAMA, Masaki, Annaka-shi, Gunma 379-0125 (JP)
(74) Representative: Mooser, Sebastian Thomas
(86) International application number: PCT/JP2022/048210
(87) International publication number: WO 2023/140072

(57) **Abstract**

The present invention is a negative electrode active material for a non-aqueous electrolyte secondary battery containing negative electrode active material particles in which the negative electrode active material particles include particles of a silicon compound (SiOₓ: 0.5≤x≤1.6), in which the negative electrode active material particles are at least partially coated with carbon material, the negative electrode active material particles contain Li in which content of the Li relative to the negative electrode active material particles is 9.7 mass% or more or less than 13.2 mass%, at least part of the Li is present as Li₂SiO₃, and when the negative electrode active material particles are measured by X-ray diffraction using Cu-Kα rays, an intensity Ia of a peak around 2θ=47.5° attributable to Si obtained by the X-ray diffraction and a peak intensity Ib of a peak around 2θ=18.7° attributable to Li₂SiO₃ obtained by the X-ray diffraction satisfy 1≤Ib/Ia≤18. This provides the negative electrode active material for a non-aqueous electrolyte secondary battery, which has stability in an aqueous slurry for a long time, high capacity, excellent cycle characteristics, and excellent first time efficiency.

## Description

### TECHNICAL FIELD

The present invention relates to a negative electrode active material for a non-aqueous electrolyte secondary battery, a method for producing the same.

### BACKGROUND ART

In recent years, small electronic devices, represented by mobile terminals, have been widely used and urgently required to reduce the size and weight and to increase life. Such market requirements have advanced the development of particularly small and lightweight secondary batteries with higher energy density. These secondary batteries are considered to find application not only for small electronic devices but for large electronic devices such as, typically, automobiles as well as power storage systems such as, typically, houses.

Among those, lithium-ion secondary batteries are easy to reduce the size and increase the capacity and have higher energy density than that of lead or nickelcadmium batteries, receiving considerable attention.

The lithium-ion secondary battery described above has a positive electrode, a negative electrode, a separator, and an electrolytic solution. The negative electrode includes a negative electrode active material related to charging and discharging reactions.

A negative electrode active material, which is usually made of a carbon material (carbon-based active material), is required to further improve the battery capacity for recent market requirements. The use of silicon as a negative electrode active material is considered to improve the battery capacity, for silicon has a theoretical capacity (4199 mAh/g) ten times or larger than graphite (372 mAh/g). Such a material is thus expected to significantly improve the battery capacity. The development of silicon materials for use as negative electrode active materials includes not only silicon as a simple but also alloy thereof and a compound thereof such as typically oxides. The consideration of active material shapes ranges from an application type, which is standard for carbon-based active materials, to an integrated type in which the materials are directly accumulated on a current collector.

The use of silicon as a main material of a negative electrode active material, however, expands and shrinks the negative electrode active material when charging or discharging, thereby making the negative electrode active material easy to break, particularly near a surface layer thereof. In addition, this negative electrode active material produces ionic substances in an interior thereof and is thus easy to break. The breakage of the surface layer of the negative electrode active material creates a new surface, increasing a reaction area of the active material. The new surface then causes the decomposition reaction of the electrolytic solution and is coated with a decomposition product of the electrolytic solution, thereby consuming the electrolytic solution. This makes cycle characteristics easy to reduce.

Up to this point, silicon oxide as a negative electrode active material has been tried to be doped with lithium to improve the battery initial efficiency and cycle characteristics (see, for example, Patent Document 1 below). When silicon oxide as the negative electrode active material incorporated with lithium is used to prepare a negative electrode, this enables a less irreversible component; thus, improvement in the initial efficiency can be expected. In addition, this improvement in the initial efficiency is expected to increase the capacity of the lithium-ion secondary battery.

However, while a first time efficiency of silicon oxide, as the negative electrode active material, is being improved, but still low compared with a positive electrode material such as LiCoO₂ (lithium-cobalt oxide) currently being used (for example, see Patent Document 2), and further improvement of the efficiency is required.

Moreover, the lithium compound in silicon compound dissolves in water, exhibiting basicity, thereby reacting with the silicon compound to generate hydrogen gas. This also leads to problems of coating failure when such a negative electrode active material is used to prepare an aqueous slurry, and thus degradation of battery characteristics.

Accordingly, methods have been developed to maintain the stability in the aqueous slurries. For example, there have been proposed methods, such as a method in which surface treatment is performed after lithium doping to silicon compound particles (for example, Patent Document 3) and a method to make lithium silicate stable against water (for example, Patent Document 4).

### CITATION LIST

### PATENT LITERATURE

Patent Document 1: JP 2011-222153 A
Patent Document 2: JP 2020-113495 A
Patent Document 3: WO 2017/051500 A1
Patent Document 4: JP 2015-153520 A

### SUMMARY OF INVENTION

### TECHNICAL PROBLEM

However, with reference to Examples of Patent Document 4 disclosing the method of lithium silicate conversion, washing with an acidic aqueous solution is performed after lithium doping to obtain target lithium silicate, and this acid washing even removes the doped lithium in such an amount that the stability in water is accomplished therewith. Consequently, the amount of lithium that can be doped is limited. This results in a problem that the battery characteristics are improved only to a limited extent.

The present invention has been made in view of the above problems. An object of the present invention is to provide a negative electrode active material for a non-aqueous electrolyte secondary battery, which exhibits high stability even in an aqueous slurry and enables excellent battery characteristics (initial efficiency and a capacity retention rate). Moreover, another object of the present invention is to provide a method for producing such negative electrode active material particles.

### SOLUTION TO PROBLEM

To achieve the object, the present invention provides a negative electrode active material for a non-aqueous electrolyte secondary battery containing negative electrode active material particles in which the negative electrode active material particles comprise particles of a silicon compound (SiOₓ: 0.5≤x≤1.6), wherein
the negative electrode active material particles are at least partially coated with carbon material,
the negative electrode active material particles contain Li in which content of the Li relative to the negative electrode active material particles is 9.7 mass% or more or less than 13.2 mass%,
at least part of the Li is present as Li₂SiO₃, and
when the negative electrode active material particles are measured by X-ray diffraction using Cu-Kα rays, an intensity Ia of a peak around 2θ=47.5° attributable to Si obtained by the X-ray diffraction and a peak intensity Ib of a peak around 2θ=18.7° attributable to Li₂SiO₃ obtained by the X-ray diffraction satisfy 1≤Ib/Ia≤18.

Since the inventive negative electrode active material contains the negative electrode active material particles containing the silicon compound particles, resulting in high battery capacity. Moreover, in the silicon compound, a SiO₂ component, which becomes unstable by insertion and release of lithium during charging and discharging of a battery, is modified to another Li compound in advance, thus, an irreversible capacity generated in charging can be reduced. Furthermore, these negative electrode active material particles include a carbon coating, which provides appropriate electric conductivity, and thus capacity retention rate and initial efficiency can be improved. In addition, these negative electrode active material particles have a content of Li of 9.7 mass% or more or less than 13.2 mass%, which can obtain a first time efficiency almost equivalent to that of a positive electrode material such as LiCoO₂ and can also ensure stability against water. When the content of Li is less than 9.7 mass%, the first time efficiency of the negative electrode active material containing silicon oxide relative to the first time efficiency of the positive electrode material is much lower. Meanwhile, when the content of Li exceeds 13.2 mass%, the stability against water is degraded. Moreover, these negative electrode active material particles contain Li₂SiO₃, a lithium compound stable against water and thus capable of maintaining a stable state without generating gas even in an aqueous slurry. As a result, the initial efficiency and the capacity retention rate can be improved. Moreover, these negative electrode active material particles can exhibit the above effects when an intensity Ib around 2θ=18.7° attributable to Li₂SiO₃ obtained by the X-ray diffraction relative to an intensity Ia around 2θ=47.5° attributable to a Si peak obtained by the X-ray diffraction satisfies 1≤Ib/Ia≤18. When the intensity ratio Ib/Ia is larger than 18, then the gas is generated in the aqueous slurry, and thus, the stability of the slurry cannot be ensured. When the intensity ratio Ib/Ia is smaller than 1, the doped Li is not stabilized, and thus, the gas is generated in the aqueous slurry. Further, hereafter, the negative electrode active material particles containing the silicon compound particles are also referred to as silicon-based active material particles. Moreover, the negative electrode active material containing these silicon-based active material particles is also referred to as a silicon-based active material.

In this event, it is preferred that the negative electrode active material particles do not contain crystalline Li₂CO₃ and LiOH·H₂O on an outermost surface.

In addition, it is possible that the negative electrode active material particles contain at least any one of the crystalline Li₂CO₃ and LiOH·H₂O on the outermost surface, and when the negative electrode active material particles are measured by X-ray diffraction using Cu-Kα rays, a peak intensity Ic around 2θ=21° attributable to Li₂CO₃ obtained by the X-ray diffraction satisfies 0≤Ic/Ia≤10 and a peak intensity Id around 2θ=32° attributable to LiOH·H₂O obtained by the X-ray diffraction may satisfy 0≤Id/Ia≤20.

When at least any one of the ionic substances of crystalline Li₂CO₃ and LiOH·H₂O is contained on the outermost surface of the negative electrode active material particles, a binding property of a binder during preparation of the aqueous slurry is improved. Moreover, when the Ic/Ia and the Id/Ia described above are Ic/Ia≤10 and Id/Ia≤20, the pH of the slurry is not raised too high during the preparation of the aqueous slurry, thus preventing thereof becoming causes for gas generation and viscosity reduction of the slurry. Furthermore, from the viewpoints of both the improvement of the binding property of the binder and pH increase, it is preferred that the crystalline Li₂CO₃ and LiOH·H₂O are substantially absent. In this case, 0=Ic/Ia and 0=Id/Ia are preferred.

Moreover, in the negative electrode active material particles according to the present invention, it is preferred that when the negative electrode active material particles are measured by the X-ray diffraction using Cu-Kα rays, a crystallite size attributable to a Si(220) crystal face obtained by the X-ray diffraction is 5 nm or less.

In this way, when the crystallite size attributable to the Si(220) crystal face is within the above range, better battery characteristics can be obtained.

Furthermore, it is preferred that when the negative electrode active material particles are measured by the X-ray diffraction using Cu-Kα rays, a peak of a peak around 2θ=18.7° attributable to Li₂SiO₃ obtained by the X-ray diffraction has a half-value width of 0.5° or more and 3.0° or less.

In this way, due to the peak around 2θ=18.7° attributable to Li₂SiO₃ obtained by the X-ray diffraction having the half-value width of 0.5° or more and 3.0° or less, the elution of alkali components into the aqueous slurry can be suppressed, thereby obtaining the better battery characteristics.

Moreover, the negative electrode active material particles preferably have at least one or more peaks in at least one region given as chemical shift values of a region of -80 ppm or more and less than -70 ppm, a region of -70 ppm or more and less than -60 ppm, and a region of -60 ppm or more and less than -30 ppm, which are obtained from a ²⁹Si-MAS-NMR spectrum of the negative electrode active material particles.

In the negative electrode active material particles containing silicon compound particles, as the chemical shift values, the peak around -60 ppm or more and less than -30 ppm is attributable to low-valent silicon oxide, the peak around -70 ppm or more and less than -60 ppm is attributable to Li₆Si₂O₇ components, the peak around -80 ppm or more and less than -70 ppm is attributable to Li₂SiO₃ components. Accordingly, by having at least one or more peaks in at least one of the above regions, the elution of alkali components into the aqueous slurry can be suppressed, thereby obtaining the better battery characteristics. Note that the peak attributable to Li₆Si₂O₇ components may be present as the peak around the region of -70 ppm or more and less than -60 ppm, but substantial absence is more preferable. That is, the presence of at least one of the peaks around -60 ppm or more and less than -30 ppm and the peak around -80 ppm or more and less than -70 ppm is more preferable to the presence of the peak around the region of -70 ppm or more and less than -60 ppm.

In addition, it is preferred that peak intensity ratios Ie/Ig and If/Ig obtained from the ²⁹Si-MAS-NMR spectrum of the negative electrode active material particles are 0≤Ie/Ig≤0.23 and 0≤If/Ig≤1.1, where

Ie represents a peak intensity of the peak obtained as the chemical shift value in the region of -60 ppm or more and less than -30 ppm,

If represents a peak intensity of the peak obtained as the chemical shift value in the region of -70 ppm or more and less than -60 ppm, and

Ig represents a peak intensity of the peak obtained as the chemical shift value in the region of -80 ppm or more and less than -70 ppm.

Silicon-based compound particles having such NMR peaks can suppress the elution of the alkali components into the aqueous slurry, thereby obtaining the better battery characteristics. Note that, as described above, the peak around the region of -70 ppm or more and less than -60 ppm is the peak attributable to the Li₆Si₂O₇ components; the absence of this peak is substantially preferable, and If/Ig=0 is more preferable.

Moreover, the negative electrode active material particles are preferably carbon-coated in an amount of 0.3 mass% or more and 10 mass% or less relative to a total of the silicon compound particles and a carbon coating layer.

In this way, when the carbon-coating amount of the negative electrode active material particles is 0.3 mass% or more and 10 mass% or less, sufficient electric conductivity can be secured, thereby obtaining the better battery characteristics.

Furthermore, an intensity ratio ID/IG of a D band and a G band in Raman spectrometry of the negative electrode active material is preferably 0.4≤ID/IG≤1.1.

In this way, when 0.4≤ID/IG≤1.1, exfoliation of the carbon film or a side reaction on a carbon surface due to expansion and shrinkage can be suppressed, thereby obtaining the better battery characteristics.

In addition, an intensity ratio IG'/IG of a G' band and a G band in Raman spectrometry of the negative electrode active material is preferably 0≤IG'/IG≤0.05.

In this way, when 0≤IG'/IG≤0.05, Li is inserted uniformly from the entire surface of the carbon during charging, thereby obtaining the better battery characteristics.

Moreover, an intensity ratio ISi/IG of a peak intensity of Si and a G band in Raman spectrometry of the negative electrode active material is preferably 0≤ISi/IG≤1.0.

In this way, when 0≤ISi/IG≤1.0, surface exposure of the silicon-based compound particles can be suppressed, and thus, the generation of the gas in the aqueous slurry can be delayed, resulting in the better battery characteristics obtained.

Furthermore, the silicon compound particles preferably have a median diameter of 0.5 um or more and 20 um or less.

When this median diameter is 0.5 um or more, the side reaction occurs in a smaller area on the surface of the negative electrode active material, thus the battery can keep the cycle retention rate high without excessively consuming Li. Meanwhile, when this median diameter is 20 um or less, the expansion is less during the Li insertion and is hard to break and form a crack. Further, since the expansion of the negative electrode active material is small, for example, a negative electrode active material layer and the like in which a commonly used silicon-based active material is mixed with a carbon active material become hard to break.

In addition, in order to achieve the above object, the present invention provides a non-aqueous electrolyte secondary battery, comprising any of the above-described negative electrode active materials for a non-aqueous electrolyte secondary battery.

Such a secondary battery has a high cycle retention rate and first-time efficiency and can be produced industrially advantageously.

Furthermore, to achieve the object described above, the present invention provides a method for producing a negative electrode active material for a non-aqueous electrolyte secondary battery containing negative electrode active material particles, the method comprising steps of:
preparing silicon compound particles containing a silicon compound (SiOₓ: 0.5≤x≤1.6);
coating at least part of the silicon compound particles with carbon material;
inserting Li into the silicon compound particles to produce Li₂SiO₃ so as to make a content of the Li 9.7 mass% or more and less than 13.2 mass% relative to the negative electrode active material particles; and
further selecting, from the prepared negative electrode active material particles, in which the negative electrode active material particles are measured by X-ray diffraction using Cu-Kα rays, such negative electrode active material particles satisfying 1≤Ib/Ia≤18, where
Ia represents an intensity of a peak around 2θ=47.5° attributable to Si obtained by the X-ray diffraction, and
Ib represents a peak intensity of a peak around 2θ=18.7° attributable to Li₂SiO₃ obtained by the X-ray diffraction.

Such a method for producing the negative electrode active material for a non-aqueous electrolyte secondary battery can obtain a non-aqueous negative electrode active material having high battery capacity and favorable cycle retention rate, which reflect intrinsic characteristics of silicon oxide modified using Li.

### ADVANTAGEOUS EFFECTS OF INVENTION

The inventive negative electrode active material is capable of improving the stability of the slurry prepared to produce the secondary battery. The use of this slurry enables formation of an industrially-utilizable coating film, thereby substantially improving the battery capacity, cycle characteristics, and first time charge-discharge characteristics. Moreover, the inventive secondary battery containing this negative electrode active material can be produced industrially advantageously and has favorable battery capacity, cycle characteristics, and the first time charge-discharge characteristics. Further, the same effects can also be attained from an electronic device, a power tool, an electric vehicle, a power storage system, etc., which use the inventive secondary battery.

The inventive method for producing the negative electrode material can produce the negative electrode material, which is capable of improving not only the stability of the slurry prepared in producing the secondary battery but also the battery capacity, the cycle characteristics, and the first-time charge-discharge characteristics.

### BRIEF DESCRIPTION OF DRAWINGS

FIG. 1 is a sectional view illustrating an example of a configuration of a negative electrode for a non-aqueous electrolyte secondary battery containing a negative electrode active material according to the present invention.
FIG. 2 shows a bulk modification apparatus usable in producing a negative electrode active material according to the present invention.
FIG. 3 is an exploded view illustrating a configuration example (laminate film type) of a lithium-ion secondary battery that contains a negative electrode active material according to the present invention.
FIG. 4 is an example of XRD charts of a negative electrode active material according to the present invention.

### DESCRIPTION OF EMBODIMENTS

Hereinafter, embodiments of the present invention will be described, but the present invention is not limited thereto.

As described above, as a technique to increase battery capacity of lithium-ion secondary battery, there has been investigated the use of a negative electrode mainly made from a silicon-based active material as a negative electrode for the lithium-ion secondary battery. The lithium-ion secondary battery, mainly made from the silicon-based active material, is desired to have initial efficiency and cycle characteristics almost equivalent to those of a lithium-ion secondary battery using a carbon material (carbon-based negative electrode active material). However, no negative electrode material has been proposed that exhibits cycle stability equivalent to that of a non-aqueous electrolyte secondary battery using the carbon material. In particular, a silicon compound containing oxygen exhibits low initial efficiency in comparison with that exhibited with carbon material; thus, the improvement in the battery capacity has been limited by this low initial efficiency.

The present inventors, therefore, have diligently investigated to obtain a negative electrode active material that can easily produce a non-aqueous electrolyte secondary battery having high battery capacity, favorable cycle characteristics, and favorable initial efficiency, and have achieved the present invention.

### [Inventive Negative Electrode Active Material]

An inventive negative electrode active material for a non-aqueous electrolyte secondary has negative electrode active material particles. Moreover, negative electrode active material particles contain particles of a silicon compound (SiOₓ: 0.5≤x≤1.6). Further, these negative electrode active material particles (silicon-based active material particles) are at least partially coated with a carbon material. Moreover, these negative electrode active material particles (silicon-based active material particles) contain Li, and content of the Li relative to the negative electrode active material particles is 9.7 mass% or more and less than 13.2 mass%. At least part of Li is present as Li₂SiO₃. Further, when the negative electrode active material particles are measured by X-ray diffraction using Cu-Kα rays, an intensity Ia of a peak around 2θ=47.5° attributable to Si obtained by the X-ray diffraction, and a peak intensity Ib of a peak around 2θ=18.7° attributable to Li₂SiO₃ obtained by the X-ray diffraction satisfy 1≤Ib/Ia≤18.

Such a negative electrode active material has high battery capacity because the negative electrode active material particles containing silicon compound are contained. Moreover, in the silicon compound, a SiO₂ component portion, which otherwise becomes unstable by inserting and releasing lithium in charging or discharging the battery, is modified in advance to another Li compound. This can reduce an irreversible capacity generated in charging. Further, providing the carbon coating on the negative electrode active material particles imparts appropriate electric conductivity, and can improve capacity retention rate and initial efficiency. Furthermore, the negative electrode active material particles contain Li₂SiO₃ (one type of silicate), which is a stable lithium compound in water. Thus, the stable state can be maintained without gas generation in an aqueous slurry, consequently leading to improvements in the initial efficiency and the capacity retention rate. In addition, the negative electrode active material particles can exhibit the effects above described when intensity Ib around 2θ=18.7° attributable to Li₂SiO₃ relative to intensity Ia around 2θ=47.5° attributable to a Si peak satisfies 1≤Ib/Ia≤18 in the X-ray diffraction using Cu-Kα rays. When the intensity ratio Ib/Ia is larger than 18, gas is generated in the aqueous slurry, consequently, the slurry stability cannot be secured.

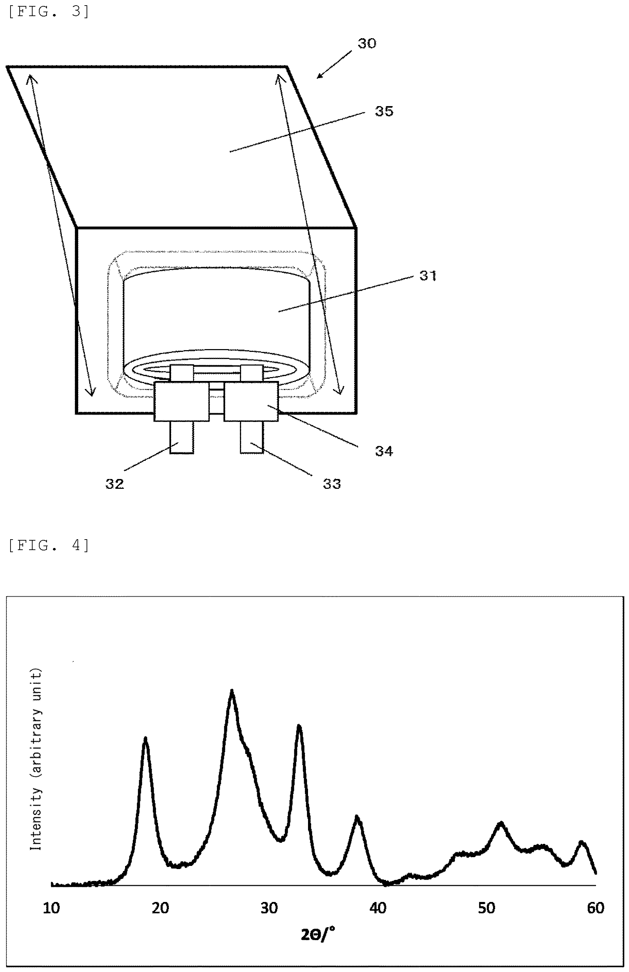

An example of an XRD spectrum of the inventive negative electrode active material is shown in FIG. 4. This is the XRD spectrum of the negative electrode active material in Example 2-1 described later.

This peak intensity can be calculated by an XRD peak analysis. For example, the analysis can be performed under the following conditions.

### XRD Measurement

· Apparatus: D2 PHASER manufactured by Bruker Corporation
· X-ray Source: Cu
· Divergence Slit: 0.5°
· Incident Side Soller: 4°
· Receiving Side Soller: 4°

### Calculation of Peak Intensity

· Software: DIFFRAC.EVA

### [Configuration of Negative Electrode]

Next, a description will be given for a configuration of a negative electrode of a secondary battery, which contains such inventive negative electrode active material.

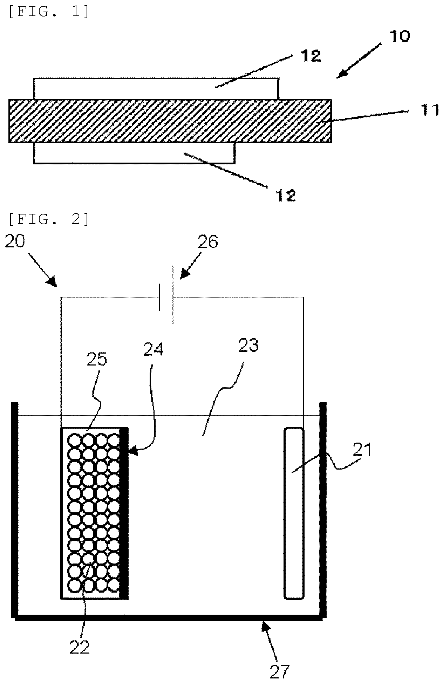

FIG. 1 shows a cross-sectional view of a negative electrode containing the inventive negative electrode active material. As shown in FIG. 1, a negative electrode 10 is configured to have a negative electrode active material layer 12 on a negative electrode current collector 11. This negative electrode active material layer 12 may be provided on both sides or only one side of the negative electrode current collector 11. Furthermore, as long as the inventive negative electrode active material for a non-aqueous electrolyte secondary battery is used, the negative electrode current collector 11 is not essential.

### [Negative Electrode Current Collector]

The negative electrode current collector 11 is made of a highly electric conductive and mechanically strong material. Examples of the electric conductive material usable for the negative electrode current collector 11 include copper (Cu) and nickel (Ni). This electric conductive material is preferably a material that does not form an intermetallic compound with lithium (Li).

The negative electrode current collector 11 preferably contains carbon (C) and sulfur (S), besides the main element, because these elements improve the physical strength of the negative electrode current collector. In particular, when an active material layer that expands in charging is disposed, the current collector containing the above elements has an effect of suppressing deformation of the electrode including the current collector. The content of the contained elements described above is not particularly limited but among them, 100 ppm or less is preferred. This is because a higher effect of suppressing deformation is obtained.

Additionally, the surface of the negative electrode current collector 11 may or may not be roughened. Examples of the roughened negative electrode current collector include a metallic foil subjected to an electrolyzing process, embossing process, chemical etching process, etc. Examples of the negative electrode current collector that is not roughened include a rolled metallic foil, etc.

### [Negative Electrode Active Material Layer]

The negative electrode active material layer 12 may contain multiple types of negative electrode active materials, such as carbon-based active material, besides the silicon-based active material particles. Depending on battery design, other materials may be further contained, such as a thickener (also referred to as a "binding agent" or "binder"), a conductive assistant agent, etc. Additionally, the form of the negative electrode active material may be particle-shaped.

Further, the inventive negative electrode active material contains silicon-based active material particles of SiOₓ (0.5≤x≤1.6) as described above. These silicon-based active material particles are silicon oxide material (SiOₓ: 0.5≤x≤1.6), and in a composition thereof, "x" is preferably close to 1 because higher cycle characteristics are obtained. Note that the composition of the silicon oxide material of the present invention does not necessarily mean purity of 100%, and may contain a small quantity of impurity elements and Li.

Moreover, in the present invention, the lower the crystalline (crystalline of Si crystallite) of a silicon compound, the better. Specifically, when negative electrode active material particles are measured by the X-ray diffraction using Cu-Kα rays, a crystallite size attributable to a Si (220) crystal face obtained by the X-ray diffraction is preferably 5 nm or less. In addition, a half-value width of a diffraction peak attributable to (220) crystal face obtained by the X-ray diffraction is preferably 1.5° or more. In particular, it is preferred that the diffraction peak is broad, and a definite peak is absent. In this way, the low crystalline and low Si crystal abundance, in particular, not only improves battery characteristics but also allows for a stable formation of Li compound.

The crystallite size attributable to this Si (220) crystal face is unable to be calculated by a common analysis but can be calculated by an XRD peak analysis. The calculation of the crystallite size by XRD can be performed under, for example, the following conditions. In the case of the broad peak, an analysis software TOPAS can be used under, for example, the following conditions.

### XRD Measurement

· Apparatus: D2 PHASER manufactured by Bruker Corporation
· X-ray Source: Cu
· Divergence Slit: 0.5°
· Incident Side Soller: 4°
· Receiving Side Soller: 4°

### Calculation of Crystallite Size

· Analysis software: DIFFRAC.TOPAS
· Method of Analysis: Peak-fitting Method
· Emission Profile: CuKa5.lam
· Function: FP (First Principle) Function
· Refinement Option: " Calculate Error" and "Use Extrapolation" are selected.

Moreover, the median diameter of silicon compound particles is not particularly limited but, among them, is preferably 0.5 um or more and 20 um or less (based on volume). With this range, lithium ions are easily occluded and released in charging and discharging, and the silicon-based active material particles become less liable to break. When this median diameter is 0.5 um or more, the surface area is not too large; thus, a side reaction hardly occurs in charging or discharging, and the irreversible battery capacity can be reduced. Meanwhile, the median diameter of 20 um or less is preferable, because the silicon-based active material particles are less liable to break, and a newly formed surface is less likely to appear.

Furthermore, in the present invention, the silicon-based active material may be present as Li₂SiO₃ as well as Li₄SiO₄ or Li₆Si₂O₇ as the Li compound contained in the silicon compound. Li silicates such as Li₂SiO₃ as well as Li₄SiO₄ or Li₆Si₂O₇ are relatively more stable than other Li compounds, and thus, the silicon-based active materials containing these Li compounds can obtain more stable battery characteristics. These Li compounds can be obtained by selectively changing a part of SiO₂ components generated within the silicon compounds to the Li compounds, and by modifying the silicon compounds.

The Li compounds within the negative electrode active material particles and the silicon compound particles can be quantified by NMR (Nuclear Magnetic Resonance) or XPS (X-ray photoelectron spectroscopy). The XPS and NMR measurements can be performed under the following conditions, for example.

### XPS

· Apparatus: X-ray photoelectron spectrometer,
· X-ray Source: Monochromatic Al Kα ray,
· X-ray Spot Diameter: 100 um,
· Ar-ion Gun Sputtering Conditions: 0.5 kV 2 mm×2 mm. ²⁹Si MAS NMR (Magic Angle Spinning-Nuclear Magnetic Resonance)
· Apparatus: 700-NMR spectroscope manufactured by Bruker Corporation,
· Probe: 4-mm HR-MAS rotor, 50 µL,
· Sample Spinning Speed: 10 kHz,
· Measurement Environment Temperature: 25°C.

Moreover, in the present invention, when the silicon compound is modified, methods such as an electrochemical method, a modification by a redox reaction, thermal doping as a physical method, and the like can be used. In particular, when the silicon compound is modified using the modification by the electrochemical method and the redox, the battery characteristics of the negative electrode active material are improved. In the modification, not only the insertion of Li into the silicon compound but also the stabilization of the Li compound by heat treatment and release of Li from the silicon compound may be performed together. As a result, stability to a slurry, such as water resistance of the negative electrode active material, is further improved. However, the modification needs to be within a range of Li content and an intensity ratio Ib/Ia of the present invention.

Furthermore, in the inventive negative electrode active material, the silicon compound can have a peak attributable a low valence region of the silicon oxide given around a region of -60 ppm or more and less than - 30 ppm, a peak attributable to Li₆Si₂O₇ region given around a region of -70 ppm or more and less than -60 ppm, and a peak attributable to Li₂SiO₃ region given a region around -80 ppm or more and less than -70 ppm, as chemical shift values obtainable from ²⁹Si-MAS-NMR spectrum. In this way, making the Li silicate by modification improves the stability against the slurry.

Moreover, in the present invention, as described above, the silicon compound particles in silicon-based active material particles contain carbon coating on at least part of a surface, thereby obtaining appropriate electric conductivity.

In addition, in the inventive negative electrode active material, the negative electrode active material particles contain at least any one of crystalline Li₂CO₃ and LiOH·H₂O on the outermost surface; and when the negative electrode active material particles are measured by the X-ray diffraction using Cu-Kα rays, a peak intensity Ic around 2θ=21° attributable to Li₂CO₃ obtained by the X-ray diffraction satisfies 0≤Ic/Ia≤10 and a peak intensity Id around 2θ=32° attributable to LiOH·H₂O obtained by the X-ray diffraction can satisfy 0≤Id/Ia≤20.

In addition, when at least any one of the ionic substances of crystalline Li₂CO₃ and LiOH·H₂O is contained on the outermost surface of the negative electrode active material particles, a binding property of a binder during preparation of the aqueous slurry is improved. Moreover, when Ic/Ia and Id/Ia described above are Ic/Ia≤10 and Id/Ia≤20, the pH of the slurry is not raised too high during the preparation of the aqueous slurry, thus preventing thereof becoming causes for gas generation and viscosity reduction of the slurry.

Moreover, in the inventive negative electrode active material, in particular, it is preferred that the negative electrode active material particles do not contain crystalline Li₂CO₃ and LiOH·H₂O on the outermost surface. From the viewpoints of both the improvement of a binding property of a binder and pH increase, it is preferred that the crystalline Li₂CO₃ and LiOH·H₂O are substantially not contained. In this case, 0=Ic/Ia and 0=Id/Ia are preferred.

In addition, in the inventive negative electrode active material, it is preferred that when the negative electrode active material particles are measured by the X-ray diffraction using Cu-Kα rays, a peak of the peak around 2θ=18.7° attributable to Li₂SiO₃ obtained by the X-ray diffraction has a half-value width of 0.5° or more and 3.0° or less. In this way, due to the peak around 2θ=18.7° attributable to Li₂SiO₃ obtained by the X-ray diffraction having a half-value width of 0.5° or more and 3.0° or less, elution of alkali components into the aqueous slurry can be suppressed, thereby obtaining the better battery characteristics.

Moreover, the negative electrode active material particles preferably have at least one or more peaks in at least one region of a region of -80 ppm or more and less than -70 ppm, a region of -70 ppm or more and less than -60 ppm, and a region of -60 ppm or more and less than -30 ppm, which are obtained from chemical shift values of a ²⁹Si-MAS-NMR spectrum of the negative electrode active material particles.

In the negative electrode active material particles containing the silicon compound particles, as the chemical shift values, the peak around -60 ppm or more and less than -30 ppm is attributable to low-valent silicon oxide, the peak around -70 ppm or more and less than -60 ppm is attributable to Li₆Si₂O₇ components, the peak around -80 ppm or more and less than -70 ppm is attributable to Li₂SiO₃ components. Accordingly, by having at least one or more peaks in at least one of the above regions, the elution of alkali components into the aqueous slurry can be suppressed, thereby obtaining the better battery characteristics. Note that the peak attributable to Li₆Si₂O₇ components may be present as the peak around the region of -70 ppm or more and less than -60 ppm, but substantial absence is more preferable. That is, the presence of at least one of the peaks around -60 ppm or more and less than -30 ppm and the peak around -80 ppm or more and less than -70 ppm is more preferable to the presence of the peak around the region of -70 ppm or more and less than -60 ppm.

In addition, it is preferred that peak intensity ratios Ie/Ig and If/Ig obtained from the ²⁹Si-MAS-NMR spectrum of the negative electrode active material particles are 0≤Ie/Ig≤0.23 and 0≤If/Ig≤1.1, where Ie represents a peak intensity of the peak obtained as the chemical shift value in the region of -60 ppm or more and less than -30 ppm, If represents a peak intensity of the peak obtained as the chemical shift value in the region of -70 ppm or more and less than -60 ppm, and Ig represents a peak intensity of the peak obtained as the chemical shift value in the region of -80 ppm or more and less than -70 ppm.

Silicon-based compound particles having such NMR peaks can suppress the elution of the alkali components into the aqueous slurry, thereby obtaining the better battery characteristics. Note that, as described above, the peak around the region of -70 ppm or more and less than -60 ppm is attributable to the Li₆Si₂O₇ components; the absence of this peak is substantially preferable, and If/Ig=0 is more preferable.

Moreover, in the inventive negative electrode active material, the negative electrode active material particles are preferably carbon-coated in an amount of 0.3 mass% or more and 10 mass% or less relative to a total of the silicon compound particles and a carbon coating layer. In this way, when the carbon-coating amount of the negative electrode active material particles is 0.3 mass% or more and 10 mass% or less, sufficient electric conductivity can be secured, thereby obtaining better battery characteristics.

Furthermore, in the inventive negative electrode active material, an intensity ratio ID/IG of a D band and a G band in Raman spectrometry of the negative electrode active material particles is preferably 0.4≤ID/IG≤1.1. In this way, when 0.4≤ID/IG≤1.1, exfoliation of the carbon film or the side reaction on a carbon surface due to expansion and shrinkage can be suppressed, thereby obtaining the better battery characteristics.

Moreover, in the inventive negative electrode active material, an intensity ratio IG'/IG of a G' band and a G band in Raman spectrometry of the negative electrode active material particles is preferably 0≤IG'/IG≤0.05. In this way, when 0≤IG'/IG≤0.05, Li is inserted uniformly from the entire surface of the carbon during charging, thereby obtaining the better battery characteristics.

Furthermore, in the inventive negative electrode active material, an intensity ratio ISi/IG of a peak intensity of Si and a G band in Raman spectrometry of the negative electrode active material particles is preferably 0≤ISi/IG≤1.0. In this way, when 0≤ISi/IG≤1.0, surface exposure of the silicon-based compound particles can be suppressed, and thus, the generation of the gas in the aqueous slurry can be delayed, resulting in the better battery characteristics obtained.

### [Method for Producing Negative Electrode]

Next, an example of a method for producing a negative electrode of the inventive non-aqueous electrolyte secondary battery is described.

First, a production method of a negative electrode material contained in the negative electrode is described. To begin with, silicon compound particles containing silicon compound (SiOₓ: 0.5≤x≤1.6) represented by SiOₓ (0.5≤x≤1.6) are prepared. Next, at least part of the silicon compound particles is coated with a carbon material. Then, Li is inserted into the silicon compound particles to modify the silicon compound particles. When Li is inserted, Li may also be released. By Li insertion, Li₂SiO₃ is generated, and a content of the Li is made at 9.7 mass% or more and less than 13.2 mass% relative to the negative electrode active material particles. In this case, Li compound can be generated inside and on a surface of the silicon compound particles at the same time. Further, from the modified negative electrode active material particles, in which the negative electrode active material particles are measured by the X-ray diffraction using Cu-Kα rays, such negative electrode active material particles satisfying 1≤Ib/Ia≤18 are selected, where Ia represents an intensity of a peak around 2θ=47.5° attributable to Si obtained by the X-ray diffraction, and Ib represents a peak intensity of a peak around 2θ=18.7° attributable to Li₂SiO₃ obtained by the X-ray diffraction. By using the negative electrode active material particles containing such silicon compound particles, a negative electrode material and the negative electrode can be produced by mixing with a conductive assistant agent and a binder, etc.

More specifically, the negative electrode active material is produced by following procedures, for example.

First, a raw material that generates a silicon oxide gas is heated in the temperature range of 900°C to 1600°C under the presence of an inert gas or under reduced pressure to generate the silicon oxide gas. In this case, as the raw material, a mixture of a metallic silicon powder and a silicon dioxide powder is used, and when considering the presence of surface oxygen of the metallic silicon powder and a slight amount of oxygen in a reaction furnace, a mixing mole ratio is desirable to be in the range of 0.8<metallic silicon powder/silicon dioxide powder<1.3. A Si crystallite in the particles is controlled by changing a feeding range or a vaporizing temperature, or by a heat treatment after the generation. A gas generated is deposited on an absorption plate. A deposit is taken out in a state where the temperature in the reaction furnace is lowered to 100°C or lower, followed by pulverizing and powdering using a ball mill or a jet mill.

Then, on a surface layer of the obtained silicon oxide powder material (silicon compound particles), a carbon coating film is formed. The carbon coating film is effective in further improving the battery characteristics of the negative electrode active material.

As a method for forming the carbon coating film on the surface layer of the powder material, thermal decomposition CVD is desirable. In the thermal decomposition CVD, the silicon oxide powder is set in a furnace, the furnace is filled with hydrocarbon gas, and the temperature in the furnace is raised. The pyrolysis temperature is not particularly limited but 1200°C or less is particularly desirable. It is more desirable to be 950°C or less because unintended disproportionation of the silicon oxide can be suppressed. The hydrocarbon gas is not particularly limited, but desirably has a composition of CₙHₘ where 2≥n. This is because of a low production cost and favorable properties of the decomposition products.

Next, Li is inserted into the negative electrode active material particles containing the silicon active material particles prepared as above to contain Li₂SiO₃. The insertion of Li is preferably performed by an electrochemical method or a redox method.

In the modification by the electrochemical method, an apparatus structure is not particularly limited, but, for example, a bulk modification apparatus 20 shown in FIG. 2 can be used to perform the bulk modification. The bulk modification apparatus 20 has: a bath 27 filled with an organic solvent 23; a positive electrode (lithium source, modification source) 21 disposed in the bath 27 and connected to one terminal of a power source 26; a powder storage container 25 disposed in the bath 27 and connected to the other terminal of the power source 26; and a separator 24 provided between the positive electrode 21 and the powder storage container 25. A silicon oxide powder 22 is stored in the powder storage container 25. After the silicon compound (silicon oxide particles) is stored in the powder storage container, the power source applies voltage between the powder storage container storing the silicon oxide particles and the positive electrode (lithium source). Thereby, lithium can be inserted into or released from the silicon compound particles; thus, the silicon oxide powder 22 can be modified. Heat treatment of the resulting silicon oxide at 400 to 800°C can stabilize the Li compound.

As the organic solvent 23 in the bath 27, it is possible to use ethylene carbonate, propylene carbonate, dimethyl carbonate, diethyl carbonate, ethylmethyl carbonate, fluoromethylmethyl carbonate, difluoromethylmethyl carbonate, etc. Moreover, as an electrolyte salt contained in the organic solvent 23, it is possible to use lithium hexafluorophosphate (LiPF₆), lithium tetrafluoroborate (LiBF₄), etc.

As the positive electrode 21, a Li foil or a Li-containing compound may be used. Examples of the Li-containing compound include lithium carbonate, lithium oxide, lithium cobalt oxide, olivine iron lithium, lithium nickel oxide, lithium vanadium phosphate, etc.

After the electrochemical Li-doping modification, washing may be performed with alkaline water in which lithium carbonate, lithium oxide, or lithium hydroxide is dissolved, alcohol, weak acid, pure water, or the like. The washing allows elution of extra alkali components and improves the slurry stability.

In the modification by the redox method, for example, first, lithium is dissolved in an ether-based solvent to prepare a solution A. The silicon active material particles are immersed in the solution A; thus, lithium can be inserted. This solution A may further contain a polycyclic aromatic compound or a linear polyphenylene compound. The Li compound can be stabilized by heat treating the resulting silicon oxide at 400 to 800°C. Additionally, after the lithium insertion, the silicon active material particles may be immersed in a solution B containing the polycyclic aromatic compound, the linear polyphenylene compound or a derivative thereof to release active lithium from the silicon active material particles. As a solvent of the solution B, for example, an ether-based solvent, a ketone-based solvent, an ester-based solvent, an alcohol-based solvent, an amine-based solvent, or a mixed solvent thereof can be used. Washing may be performed with alkaline water in which lithium carbonate, lithium oxide, or lithium hydroxide is dissolved, alcohol, weak acid, pure water, or the like. The washing allows elution of extra alkali components and improves the slurry stability.

As the ether-based solvent used in the solution A, it is possible to use diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, mixed solvents thereof, etc. Among these, tetrahydrofuran, dioxane, 1,2-dimethoxy ethane, and diethylene glycol dimethyl ether are preferably used. These solvents are preferably dehydrated, and preferably deoxygenized.

Moreover, as the polycyclic aromatic compound contained in the solution A, it is possible to use one or more of naphthalene, anthracene, phenanthrene, naphthalene, pentacene, pyrene, triphenylene, coronene, chrysene, and derivatives thereof. As the linear polyphenylene compound, it is possible to use one or more of biphenyl, terphenyl, and derivatives thereof.

As the polycyclic aromatic compound contained in the solution B, it is possible to use naphthalene, anthracene, phenanthrene, naphthalene, pentacene, pyrene, triphenylene, coronene, chrysene, and derivatives thereof.

Moreover, as the ether-based solvent of the solution B, it is possible to use one or more of diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, mixed solvents thereof, etc.

As the ketone-based solvent, it is possible to use acetone, acetophenine, etc.

As the ester-based solvent, it is possible to use methyl formate, methyl acetate, ethyl acetate, propyl acetate, isopropyl acetate, etc.

As the alcohol-based solvent, it is possible to use methanol, ethanol, propanol, isopropyl alcohol, etc.

As the amine-based solvent, it is possible to use methylamine, ethylamine, ethylenediamine, etc.

Alternatively, Li may be inserted into the negative electrode active material particles by a thermal doping method. In this case, the modification is possible, for example, by mixing the negative electrode active material particles with a LiH powder or a Li powder, followed by heating under a non-oxidizing atmosphere. As the non-oxidizing atmosphere, for example, Ar atmosphere or the like can be employed. More specifically, first, under Ar atmosphere, the LiH powder or the Li powder is sufficiently mixed with the silicon oxide powder, and sealed. The whole sealed vessel is stirred to make the mixture uniform. Then, the mixture is heated in a range of 700°C to 750°C to perform the modification. In this event, in order to release Li from the silicon compound, the heated powder may be sufficiently cooled and then washed with alkaline water in which lithium carbonate, lithium oxide, or lithium hydroxide is dissolved, alcohol, weak acid, pure water, or the like. The washing allows elution of extra alkali components and improves the slurry stability.

### <Aqueous Negative Electrode Slurry Composition >

An aqueous negative electrode slurry composition can be obtained by mixing the negative electrode active material prepared as described above with other materials, as necessary, such as a negative electrode binding agent and a conductive assistant agent; and then adding water (an organic solvent or the like can also be added in addition to water).

Such an aqueous negative electrode slurry composition is capable of suppressing changes with time to a small degree due to, for example, gas generation during storage; thus, such a composition has greater freedom in production process and is suited for industrial production. Moreover, when this aqueous negative electrode slurry composition is used to produce a negative electrode, a secondary battery having high capacity and favorable initial charging-discharging characteristics is successfully obtained.

Next, the aqueous negative electrode slurry composition described above is applied onto the surface of a negative electrode current collector and dried to form a negative electrode active material layer. In this event, heat pressing and the like may be performed, as necessary. As described above, a negative electrode is successfully produced.

### <Lithium-ion Secondary Battery>

Next, a lithium-ion secondary battery of a laminate film type will be described as a concrete example of the inventive non-aqueous electrolyte secondary battery described above.

### [Configuration of Laminate Film Type Secondary Battery]

A laminate film type lithium-ion secondary battery 30 shown in FIG. 3 mainly includes a wound electrode body 31 stored in a sheet-shaped exterior member 35. This wound electrode body 31 is formed by winding a positive electrode, a negative electrode, and a separator disposed between these electrodes. There is also a case storing a laminate having a separator disposed between a positive electrode and a negative electrode without winding. The electrode bodies of both types have a positive-electrode lead 32 attached to the positive electrode and a negative-electrode lead 33 attached to the negative electrode. The outermost circumference of the electrode bodies is protected by a protecting tape.

The positive-electrode leads 32 and the negative-electrode 33, for example, extend from the interior of the exterior member 35 toward the exterior in one direction. The positive-electrode lead 32 is made of, for example, a conductive material, such as aluminum, and the negative-electrode lead 33 is made of, for example, a conductive material, such as nickel or copper.

The exterior member 35 is, for example, a laminate film having a fusion-bond layer, a metallic layer, and a surface protecting layer laminated in this order. The laminate films are fusion-bonded or stuck with an adhesive or the like at the outer edges therebetween of the fusion-bond layers of two films such that each fusion-bond layer faces the electrode body 31. The fusion-bond portion is, for example, a film, such as a polyethylene or polypropylene film. The metallic portion is aluminum foil, etc. The protecting layer is, for example, nylon, etc.

In the space between the exterior member 35 and the positive and negative electrode leads, a close adhesion film 34 is inserted to prevent air from entering therein. Exemplary materials of the close adhesion film include polyethylene, polypropylene, and polyolefin resins.

The positive electrode has a positive electrode active material layer disposed on one side or both sides of a positive electrode current collector like the negative electrode 10 shown in FIG. 1, for example.

The positive electrode current collector is made of, for example, a conductive material, such as aluminum.

The positive electrode active material layer contains any one or two or more positive electrode materials capable of occluding and releasing lithium ions and may contain a positive electrode binding agent, a positive electrode conductive assistant agent, a dispersing agent, or other materials according to design. In this case, details concerning the positive electrode binding agent and the positive electrode conductive assistant agent are the same as in those for the negative electrode binding agent and negative electrode conductive assistant agent as already described, for example.

The positive electrode material is desirably a compound containing lithium. Examples of lithium-containing compounds include complex oxides composed of lithium and a transition metal element, or phosphate compounds containing lithium and a transition metal element. Among these positive electrode materials, a compound containing at least one of nickel, iron, manganese, and cobalt is preferable. The chemical formula of such compounds is expressed by, for example, LiₓM₂O₂ or Li_{y}M₂PO₄. In the formulae, M₁ and M₂ represent at least one of the transition metal elements. "x" and "y" represent a value varied depending on a charging or discharging status of a battery, which is typically shown as 0.05≤x≤1.10 and 0.05≤y≤1.10.

Examples of the complex oxides having lithium and a transition metal element include a lithium cobalt complex oxide (LiₓCoO₂), a lithium nickel complex oxide (LiₓNiO₂), a lithium-nickel-cobalt complex oxide, etc. Examples of the lithium-nickel-cobalt complex oxide include lithium-nickel-cobalt-aluminum complex oxide (NCA), lithium-nickel-cobalt-manganese complex oxide (NCM), etc.

Examples of the phosphate compounds containing lithium and a transition metal element include a lithium-iron-phosphate compound (LiFePO₄), a lithium-iron-manganese-phosphate compound (Li Fe₁₋ᵤMnᵤPO₄ (0<u<1), etc. Not only higher battery capacity, but also excellent cycle characteristics can be obtained by using these positive electrode materials.

### [Negative Electrode]

The negative electrode has a configuration that is similar to that of the above negative electrode 10 for a lithium-ion secondary battery shown in FIG. 1, and, for example, has the negative electrode active material layers disposed on both faces of the current collector. This negative electrode preferably has a negative-electrode charge capacity larger than an electrical capacitance (battery charge capacity) provided by the positive electrode active material agent. Consequently, precipitation of lithium metal can be suppressed on the negative electrode.

The positive electrode active material layer is provided partially on both surfaces of the positive electrode current collector. Similarly, the negative electrode active material layer is also provided partially on both surfaces of the negative electrode current collector. In this case, the negative electrode active material layer provided on the negative electrode current collector, for example, has a region that does not face any positive electrode active material layer. This intends to perform a stable battery design.

The region described above, where the positive electrode active material layer and negative electrode active material layer do not face one another, is hardly affected by charging and discharging. The state of the negative electrode active material layer is consequently retained immediately after forming intact. This enables reproducibly high-precision investigation of, for example, the composition of negative electrode active material without relying on presence or absence of charging and discharging.

### [Separator]

The separator separates the positive electrode and the negative electrode, prevents current short-circuit due to contact between these electrodes, and passes lithium ions therethrough. This separator may be made of, for example, a porous film of synthetic resin or ceramic or two or more laminated porous films to have a laminate structure. Examples of synthetic resin include polytetrafluoroethylene, polypropylene, polyethylene, etc.

### [Electrolytic solution]

At least a part of the active material layers or the separator is impregnated with an electrolyte in liquid form (electrolytic solution). This electrolytic solution includes electrolyte salt dissolved in a solvent and may contain other materials such as additives.

The solvent to be used can be, for example, a non-aqueous solvent. Examples of the non-aqueous solvent include ethylene carbonate, propylene carbonate, butylene carbonate, dimethyl carbonate, diethyl carbonate, ethylmethyl carbonate, methylpropyl carbonate, 1,2-dimethoxyethane, tetrahydrofuran, etc. Among these, at least one or more ethylene carbonate, propylene carbonate, dimethyl carbonate, diethyl carbonate, or ethylmethyl carbonate are desirably used because such solvents enable better characteristics. In this case, superior characteristics can be obtained by combined use of a high-viscosity solvent, such as ethylene carbonate or propylene carbonate, and a low-viscosity solvent, such as dimethyl carbonate, ethylmethyl carbonate, or diethyl carbonate. This is because the dissociation of electrolyte salt and ionic mobility are improved.

The solvent additive preferably contains an unsaturated carbon bond cyclic carbonic ester because this enables the formation of a stable coating on the negative electrode surface at charging and discharging and the suppression of a decomposition reaction of the electrolytic solution. Examples of the unsaturated carbon bond cyclic carbonic esters include vinylene carbonate, vinyl ethylene carbonate, etc.

In addition, the solvent additive preferably contains sultone (cyclic sulfonic acid ester) because this improves chemical stability of a battery. Examples of the sultone include propane sultone and propene sultone.

In addition, the solvent preferably contains acid anhydride because this improves chemical stability of the electrolytic solution. An example of the acid anhydride includes propane disulfonic acid anhydride.

The electrolyte salt can contain, for example, any one or more light metal salts, such as lithium salt. Examples of the lithium salt can include lithium hexafluorophosphate (LiPF₆), lithium tetrafluoroborate (LiBF₄), etc.

The content of the electrolyte salt relative to the solvent is preferably 0.5 mol/kg or more and 2.5 mol/kg or less. This is because high ionic conductivity is obtained.

### [Method of Producing Laminate Film Type Secondary Battery]

In the beginning, a positive electrode is produced with the above positive electrode material. A positive electrode mixture is first created by mixing the positive electrode active material with as necessary the positive electrode binding agent, the positive electrode conductive assistant agent, and other materials, and then dispersed in an organic solvent to form slurry of the positive-electrode mixture. Subsequently, the mixture slurry is applied to a positive electrode current collector with a coating apparatus such as a die coater having a knife roll or a die head and dried by hot air to obtain a positive electrode active material layer. The positive electrode active material layer is finally compression molded with, for example, a roll press. In this event, heating may be performed, and the compression may be repeated multiple times.

Next, a negative electrode active material layer is formed on a negative electrode current collector to produce a negative electrode through the same procedure as in the above production of the negative electrode 10 for a lithium-ion secondary battery.

In producing the positive electrode and the negative electrode, the active material layers are formed on both surfaces of the positive and negative electrode current collectors, respectively. In this event, in both electrodes, the coated lengths of these active material layers formed on both surfaces may differ from one another (see FIG. 1).

Then, an electrolytic solution is prepared. Subsequently, with ultrasonic welding or the like, a positive electrode lead 32 is attached to the positive electrode current collector, and a negative-electrode lead 33 is attached to the negative electrode current collector. Then, the positive electrode and the negative electrode, in which the separator is interposed therebetween, are stacked or wound to produce a wound electrode body 31, and a protecting tape is stuck to the outermost circumference of the body. Next, the wound body is formed so as to become a flattened shape. Subsequently, the wound electrode body is interposed in the folded film-shaped exterior member 35. Then, the insulating portions of the exterior member are stuck to one another by heat sealing, thereby the wound electrode body is encapsulated with one direction being opened. Thereafter, the close-adhesion films are inserted between the exterior member, the positive electrode lead, and the negative electrode lead. Then, the prepared electrolytic solution is introduced in a predetermined amount from the opened side to perform vacuum impregnating. After the impregnation, the opened side is stuck by a vacuum heat sealing method. In this manner, the laminate film type secondary battery 30 is successfully produced.

In the inventive non-aqueous electrolyte secondary battery, such as the laminate film type secondary battery 30 produced as described above, it is preferred that a negative-electrode utilization ratio is 93 % or more and 99 % or less at charging and discharging. With the negative-electrode utilization ratio in the range of 93% or more, a first time charge efficiency is not lowered, and a battery capacity can be greatly improved. Meanwhile, with the negative-electrode utilization ratio in the range of 99% or less, Li is not precipitated, and safety can be guaranteed.

### EXAMPLE

Hereinafter, the present invention will be more specifically described by showing Examples of the present invention and Comparative Examples. However, the present invention is not limited to these Examples.

### (Example 1-1)

The laminate film type secondary battery 30 shown in FIG. 3 was produced by the following procedure.

First, a positive electrode was produced. A positive-electrode mixture was prepared by mixing 95 parts by mass of lithium-nickel-cobalt-aluminum complex oxide (LiNi_{0.7}Co_{0.25}Al_{0.05}O), 2.5 parts by mass of a positive electrode conductive assistant agent (acetylene black), and 2.5 parts by mass of a positive electrode binding agent (polyvinylidene fluoride: PVDF) as a positive electrode active material. Then, the positive electrode mixture was dispersed in an organic solvent (N-methyl-2-pyrrolidone: NMP) to form a paste slurry. The slurry was subsequently applied to both surfaces of a positive electrode current collector with a coating apparatus having a die head and dried with a hot air type drying apparatus. In this case, the positive electrode current collector used here had a thickness of 15 um. The resultant was finally compression molded with a roll press.

Next, a negative electrode was produced. In the beginning, a silicon-based active material was produced as follows. A mixed raw material of metallic silicon and silicon dioxide (evaporative starting material) was placed in a reaction furnace and evaporated in an atmosphere with a vacuum degree of 10 Pa to deposit the evaporated material on an adsorption plate. After sufficient cooling, the deposit was taken out and pulverized with a ball mill. After particle diameter adjustment, thermal CVD was performed to coat the particles with a carbon coating. Subsequently, lithium was inserted into the silicon compound particles by a redox method to modify the silicon compound coated with the carbon coating. At first, the negative electrode active material particles were immersed into a solution (solution A) in which a lithium piece and naphthalene, being an aromatic compound, were dissolved in tetrahydrofuran (hereinafter referred to as THF). This solution A was prepared by: dissolving naphthalene in a THF solvent at a concentration of 0.2 mol/L; and then adding a lithium piece whose mass was 12 mass% of this mixture solution of THF and naphthalene. Additionally, when the negative electrode active material particles were immersed, the solution temperature was 20°C, and the immersion time was 20 hours. Thereafter, the negative electrode active material particles were collected by filtration. By the above-described treatment, lithium was inserted in the negative electrode active material particles.

The silicon compound particles obtained were heat-treated under an argon atmosphere at 650°C or lower for 24 hours to stabilize a Li compound.

In this manner, the negative electrode active material particles (silicon-based active material particles) were modified. By the aforementioned process, the negative electrode active material particles were prepared. Note that Li content in the negative electrode active material particles is 10.0 mass%, carbon coverage was 3 mass%, and the negative electrode active material particles had a median diameter (based on volume, D50) of 8.9 µm.

The obtained negative electrode active material particles were subjected to XRD measurement, ²⁹Si-NMR measurement, Raman spectrometry, and particle size distribution measurement.

The silicon-based active material prepared as described above was blended with a carbon-based active material in a mass ratio of 2:8 to prepare a negative electrode active material. The carbon-based active material used herein was a mixture in which artificial graphite and natural graphite coated with a pitch layer were mixed in a mass ratio of 5:5. Additionally, the carbon-based active material had a median diameter of 20 µm.

Next, the prepared negative electrode active material, a conductive assistant agent 1 (carbon nanotube, CNT), a conductive assistant agent 2 (carbon fine particles having a median diameter of about 50 nm), styrene-butadiene rubber (styrene-butadiene copolymer; hereinafter, referred to as SBR), and carboxymethyl cellulose (hereinafter, referred to as CMC) were mixed in a dry mass ratio of 92.5:1:1:2.5:3. This was then diluted with pure water to form negative electrode mixture slurry. Incidentally, the foregoing SBR and CMC were negative electrode binders (negative electrode binding agents). In this event, to measure the stability of the negative electrode mixture slurry, 30 g of the prepared negative electrode mixture slurry was taken out separately from the remaining slurry to produce a secondary battery and stored at 20°C to observe the gas generation status after the preparation of the negative-electrode mixture slurry. This gas generation status was evaluated by the time from the preparation of the slurry to the time to generate the gas. The longer the time, the stabler the slurry was considered to be.

As a negative electrode current collector, an electrolytic copper foil (thickness: 15 um) was used. Finally, the negative electrode mixture slurry was applied onto the negative electrode current collector and dried at 100°C for 1 hour in a vacuum atmosphere. After drying, the negative electrode had a deposited amount of a negative electrode active material layer per unit area at one side (also referred to as an area density) of 5 mg/cm².

Next, fluoroethylene carbonate (FEC), ethylene carbonate (EC), and diethyl carbonate (DEC) were mixed as a solvent, followed by dissolving electrolyte salt (lithium hexafluorophosphate: LiPF₆) to prepare an electrolytic solution. In this case, the solvent composition was set to FEC:EC:DEC=1:2:7 in a volume ratio, and the content of the electrolyte salt was set to 1.0 mol/kg based on the solvents. Further, vinylene carbonate (VC) was added in an amount of 1.5 mass% to the obtained electrolytic solution.

Then, a secondary battery was assembled as follows. First, an aluminum lead was attached to one end of the positive electrode current collector by ultrasonic welding, and a nickel lead was welded to the negative electrode current collector. Subsequently, the positive electrode, a separator, the negative electrode, and a separator were stacked in this order and wound in a longitudinal direction to produce a wound electrode body. The end of the winding portion was fixed with PET-protecting tape. The separator used herein was a 12 um laminate film in which a film mainly composed of porous polypropylene was sandwiched by films mainly composed of porous polyethylene. Thereafter, an electrode body was put between exterior member, and then outer peripheries excluding one side were heat-sealed each other, and thereby, the electrode body was stored in the exterior member. As the exterior member, an aluminum laminate film was used in which a nylon film, an aluminum foil, and a polypropylene film were laminated. Then, the prepared electrolytic solution was introduced from the opening to perform the impregnation under a vacuum atmosphere. The opening was then sealed by heat sealing.

The cycle characteristics and first time charge-discharge characteristics of the secondary battery produced were evaluated as described above.

The cycle characteristics were investigated in the following manner. First, two cycles of charging and discharging were performed at 0.2 C under an atmosphere of 25°C to stabilize the battery, and the discharge capacity in the second cycle was measured. Next, charging and discharging were repeated until the total number of cycles reached 299 cycles and the discharge capacity was measured every cycle. Finally, a capacity retention rate (hereinafter, also simply referred to as retention rate) was calculated by dividing the discharge capacity in the 300th cycle, which was obtained by charging and discharging at 0.2 C, by the discharge capacity in the second cycle. In the normal cycle, that is, in the cycles from the third cycle to the 299th cycle, the charging and discharging were performed at 0.7 C in charging and at 0.5 C in discharging.

In investigating the first time charge-discharge characteristics, initial efficiency (hereinafter may also be referred to as initial efficiency) was calculated. The initial efficiency was calculated from the equation shown by: initial efficiency (%)=(first-time discharge capacity/first-time charge capacity)×100. The atmospheric temperature was the same as that in investigating the cycle characteristics. Additionally, this initial efficiency was such a calculated efficiency that the discharge capacity reached 1.2 V.

### (Comparative Examples 1-1, 1-2)

Secondary batteries were produced under the same conditions and each evaluation was performed as in Example 1-1 except that peak intensity ratios Ib/Ia of X-ray diffraction for silicon-based negative electrode active material particles were changed as shown in Table 1. The peak intensity ratios Ib/Ia were adjusted by Li contents and heat treatment conditions (temperature, time).

Results of the evaluation for Example 1-1, Comparative Examples 1-1 and 1-2 are shown in Table 1.

**[Table 1]**

| SiOx x=1 D50=8.9µm, Li₂SiO₃, Ic/Ia=0, Id/Ia=0 | | | | |
|---|---|---|---|---|
| SiOx ratio 20 mass%, Carbon-coating amount 3 mass % | | | | |
| Modification method: Redox method | | | | |
| Table 1 | Ib/Ia | 20 mass% 1.2V First-time efficiency | 300 Cycle retention rate | Gas generation |
| Example 1-1 | 17.2 | 92.5% | 87.3% | >4 days |
| Comparative Example 1-1 | 18.4 | 89.4% | 84.9% | >4 days |
| Comparative Example 1-2 | 19.0 | 89.6% | 80.1% | 1 day |

In silicon compounds represented by SiOx as shown in Table 1, when the intensity ratio Ib/Ia exceeded 18, a peak intensity of Li₂SiO₃ was too high, resulting in deterioration of battery characteristics. In Comparative Example 1-1, the peak intensity of Li₂SiO₃ was high, and the first time efficiency was poor. On the other hand, in Comparative Example 1-2, a Si peak was strong, resulting in strong gas generation in slurry, which in turn deteriorates the battery characteristics. On the other hand, when the intensity ratio Ib/Ia was 18 or lower, slurry stability had no problem and then excellent battery characteristics (high initial efficiency and high cycle retention rate) were successfully obtained.

### (Example 2-1 to Example 2-5, Comparative Examples 2-1, 2-2)

Secondary batteries were produced in the same way as in Example 1-1, except that Li contents in silicon compound particles and peak intensity ratios Ib/Ia of X-ray diffraction were adjusted. The Li contents were adjusted by Li-doping amounts.

The Li contents were adjusted as shown in Table 2. As a result, when the Li content was 13.2 mass% or higher, slurry stability was decreased; thus, unable to perform a battery evaluation. For example, as shown in Comparative Example 2-2, when the Li content was 13.2 mass% or higher, the slurry stability was decreased, and the preparation of electrodes was difficult, making the battery evaluation impossible. On the other hand, as shown in Comparative Example 2-1, when the Li content was low (9.4 mass%), improvement of the battery characteristics was not observed.

**[Table 2]**

| SiOx x=1 D50=8.9µm, Li₂SiO₃, Ic/Ia=0, Id/Ia=0, Crystallite size=1.7nm, Li₂SiO₃, Half-value width=1.46° , | | | | | |
|---|---|---|---|---|---|
| Ie/If=0.09, If/Ig=0.25, SiOx ratio 20 mass%, Carbon coating amount 3 mass% | | | | | |
| Modification method: Redox method | | | | | |
| Table 2 | Li content | Ib/Ia (Li₂SiO₃ peak/ Si peak) | 20 mass% 1.2V First-time efficiency | 300 Cycle retention rate | Gas generation |
| Example 1-1 | 10.0% | 17.2 | 92.5% | 87.3% | > 4 days |
| Comparative Example 2-1 | 9.4% | 18.4 | 89.4% | 84.9% | > 4 days |
| Example 2-1 | 10.1 % | 15.8 | 92.8% | 87.9% | > 4 days |
| Example 2-2 | 10.3% | 11.6 | 92.9% | 88.2% | > 4 days |
| Example 2-3 | 10.5% | 6.0 | 93.0% | 88.4% | > 4 days |
| Example 2-4 | 11% | 2.3 | 93.1% | 88.2% | > 4 days |
| Example 2-5 | 11.6% | 1.3 | 93.2% | 88.1% | > 4 days |
| Comparative Example 2-2 | 13.2% | 0.9 | - | - | 0 day |

### (Example 3-1 to Example 3-10)

Secondary batteries were produced, and each evaluation was performed under the same condition as in Example 1-1, except that prepared amounts of Li compound (Li₂CO₃ and LiOH·H₂O in crystalline) on the outermost surface of negative electrode active material particles were adjusted. The Li₂CO₃ and LiOH·H₂O in crystalline were able to be adjusted by adjusting an atmospheric exposure time. Results of evaluations of Example 1-1, Example 3-1 to Example 3-10 are shown in Table 3.

**[Table 3]**

| SiOx x=1 D50=8.9µm, Li₂SiO₃, Ib/Ia=17.2, Crystallite size=1.7nm, Li₂SiO₃, Half-value width=1.46° | | | | | |
|---|---|---|---|---|---|
| Ie/If=0.09, If/Ig=0.25, SiOx ratio 20 mass%, Carbon-coating amount 3 mass% | | | | | |
| Modification method: Redox method | | | | | |
| Table 3 | Ic/Ia (Li₂CO₃ peak/ Si peak) | Id/Ia (LiOH H₂O peak/ Si peak) | 20 mass% 1.2V First-time efficiency | 300 Cycle retention rate | Gas generation |
| Example 1-1 | 0.0 | 0.0 | 92.5% | 87.3% | > 4 days |
| Example 3-1 | 2.4 | 0.0 | 92.4% | 87.3% | > 4 days |
| Example 3-2 | 5.6 | 0.0 | 92.4% | 87.2% | > 4 days |
| Example 3-3 | 8.3 | 0.0 | 92.3% | 87.2% | > 4 days |
| Example 3-4 | 9.8 | 0.0 | 92.2% | 87.1% | > 4 days |
| Example 3-5 | 2.5 | 8.1 | 92.3% | 87.2% | > 4 days |
| Example 3-6 | 6.0 | 15.8 | 92.3% | 87.1% | > 4 days |
| Example 3-7 | 8.6 | 19.7 | 92.0% | 87.1% | > 4 days |
| Example 3-8 | 10.5 | 0.0 | 91.8% | 85.0% | 2 days |
| Example 3-9 | 9.8 | 20.8 | 90.8% | 85.0% | 2 days |
| Example 3-10 | 10.3 | 20.2 | 90.6% | 85.0% | 2 days |

As shown in Table 3, each peak intensity ratio of X-ray diffraction spectrum showed higher first time efficiency and better days-until-gas-generation when the intensity ratio Ic/Ia was 10 or lower. As a result, an improvement in battery characteristics was achieved. On the other hand, Id/Ia less than 20 also led to lower first time efficiency and improved days-until-gas-generation.

### (Example 4-1 to Example 4-7)

Next, secondary batteries were produced and each evaluation was performed under the same conditions as in Example 1-1, except that a crystallite size on a Si (220) face of negative electrode active material particles was adjusted. This crystallite size was adjustable by heat load of silicon oxide. Results of evaluation of Example 1-1, Example 4-1 to Example 4-7 are shown in Table 4.

**[Table 4]**

| SiOx x=1 D50=8.9µm, Li₂SiO₃, Ib/Ia=17.2, Ic/Ia=0, Id/Ia=0, Li₂SiO₃, Half-value width=1.46° , | | | | |
|---|---|---|---|---|
| Ie/If=0.09, If/Ig=0.25, SiOx ratio 20 mass%, Carbon coating amount 3 mass% | | | | |
| Modification method: Redox method | | | | |
| Table 4 | Crystallite size | 20 mass% 1.2V First-time efficiency | 300 Cycle retention rate | Gas generation |
| Example 1-1 | 1.7 | 92.5% | 87.3% | > 4 days |
| Example 4-1 | 1.5 | 92.4% | 87.8% | > 4 days |
| Example 4-2 | 1.6 | 92.5% | 87.7% | > 4 days |
| Example 4-3 | 1.9 | 92.6% | 87.2% | > 4 days |
| Example 4-4 | 2.2 | 92.7% | 87.1% | > 4 days |
| Example 4-5 | 3.7 | 92.8% | 87.1% | > 4 days |
| Example 4-6 | 4.8 | 92.9% | 87.0% | > 4 days |
| Example 4-7 | 5.2 | 91.1% | 86.0% | 2 days |

As shown in Table 4, when the crystallite size was 5 nm or smaller, gas generation was suppressed, and better battery characteristics were obtained as well.

### (Example 5-1 to Example 5-5, Comparative Example 5-1)

Next, secondary batteries were produced and each evaluation was performed under the same conditions as in Example 1-1, except that a half-value width of a peak of Li₂SiO₃ obtained by XRD spectrum in negative electrode active material particles was adjusted. This peak half-value width was adjusted according to heat treatment conditions (temperature, time). Results of evaluations of Example 1-1, Example 5-1 to Example 5-5, and Comparative Example 5-1 are shown in Table 5.

**[Table 5]**

| SiOx x=1 D50=8.9µm, Li₂SiO₃, Ib/Ia=17.2, Ic/Ia=0, Id/Ia=0, | | | | | |
|---|---|---|---|---|---|
| Ie/If=0.09, If/Ig=0.25, SiOx ratio 20 mass% Carbon coating amount 3 mass% | | | | | |
| Modification method: Redox method | | | | | |
| Table 5 | Li content | Li₂SiO₃ Half-value width | 20 mass% 1.2V First-time efficiency | 300 Cycle retention rate | Gas generation |
| Example 1-1 | 10.0% | 1.46 | 92.5% | 87.3% | > 4 days |
| Example 5-1 | 10.0% | 0.51 | 92.7% | 87.8% | > 4 days |
| Example 5-2 | 10.0% | 0.97 | 92.6% | 87.5% | > 4 days |
| Example 5-3 | 10.0% | 1.98 | 92.5% | 87.3% | > 4 days |
| Example 5-4 | 10.0% | 2.48 | 92.4% | 87.2% | > 4 days |
| Example 5-5 | 10.0% | 2.91 | 92.3% | 87.1% | > 4 days |
| Comparative Example 5-1 | 10.0% | 3.13 | 90.8% | 84.9% | 1 day |

As shown in Table 5, when the half-value width of a peak of Li₂SiO₃ exceeded 3°, Li content tended to increase. In other words, the half-value width of Li₂SiO₃ tended to become wider when the Li content became too much. In this case, gas generation from slurry became significant, resulting in a decrease in battery characteristics. The half-value width of Li₂SiO₃ was preferably 0.5° or more and 3° or less.

### (Example 6-1 to Example 6-10)

Next, secondary batteries were produced and each evaluation was performed under the same conditions as in Example 1-1, except that peak intensity ratios Ie/Ig and If/Ig in negative electrode active material particles were adjusted. The peak intensity ratios were able to be adjusted by heat treatment conditions of Li-containing silicon oxide. Results of evaluations of Example 6-1 to Example 6-10 are shown in Table 6.

**[Table 6]**

| SiOx x=1 D50=8.9µm, Li₂SiO₃, Ib/Ia=17.2, Ic/Ia=0, Id/Ia=0, Li₂SiO₃, Half-value width=1.46° | | | | | |
|---|---|---|---|---|---|
| SiOx ratio 20 mass%, Carbon-coating amount 3 mass% | | | | | |
| Modification method: Redox method | | | | | |
| Table 6 | Ie/Ig (Low-valence peak/ Li₂SiO₃ peak) | If/Ig (Li₆Si₂O₇ peak/ Li₂SiO₃ peak) | 20 mass% 1.2V First-time efficiency | 300 Cycle retention rate | Gas generation |
| Example 1-1 | 0.09 | 0.25 | 92.5% | 87.3% | > 4 days |
| Example 6-1 | 0.09 | 0.30 | 92.4% | 87.3% | > 4 days |
| Example 6-2 | 0.10 | 0.38 | 92.4% | 87.2% | > 4 days |
| Example 6-3 | 0.12 | 0.46 | 92.3% | 87.2% | > 4 days |
| Example 6-4 | 0.15 | 0.67 | 92.2% | 87.1% | > 4 days |
| Example 6-5 | 0.18 | 0.87 | 92.2% | 87.1% | > 4 days |
| Example 6-6 | 0.22 | 1.07 | 92.0% | 87.0% | > 4 days |
| Example 6-7 | 0.06 | 0.18 | 92.6% | 87.6% | > 4 days |
| Example 6-8 | 0.04 | 0.12 | 92.7% | 87.8% | > 4 days |
| Example 6-9 | 0.01 | 0.04 | 92.8% | 87.9% | > 4 days |
| Example 6-10 | 0.24 | 1.18 | 91.3% | 86.4% | 2 days |

As shown in Table 6, when Ie/Ig was 0.23 or less and If/Ig was 1.1 or less, stabilization of doped Li was sufficient, and thus gas generation during preparing slurry was suppressed and excellent battery characteristics were observed as well.

### (Example 7-1 to Example 7-5)

Next, secondary batteries were produced and each evaluation was performed under the same conditions as in Example 1-1, except that a carbon-coating amount in negative electrode active material particles was adjusted. The carbon-coating amount was adjustable according to thermal CVD time. Results of evaluations of Example 1-1, Example 7-1 to Example 7-5 are shown in Table 7.

**[Table 7]**

| SiOx x=1 D50=8.9µm, Li₂SiO₃, Ib/Ia=17.2, Ic/Ia=0, Id/Ia=0, Li₂SiO₃, Half-value width=1.46° , | | | | |
|---|---|---|---|---|
| Ie/If=0.09, If/Ig=0.25, SiOx ratio 20 mass% | | | | |
| Modification method: Redox method | | | | |
| Table 7 | Carbon coating layer | 20 mass% 1.2V First-time efficiency | 300 Cycle retention rate | Gas generation |
| Example 1-1 | 3 mass% | 92.5% | 87.3% | > 4 days |
| Example 7-1 | 0.5 mass% | 92.2% | 87.0% | > 4 days |
| Example 7-2 | 1 mass% | 92.3% | 87.1% | > 4 days |
| Example 7-3 | 5 mass% | 92.5% | 87.3% | > 4 days |
| Example 7-4 | 15 mass% | 92.5% | 87.5% | > 4 days |
| Example 7-5 | 0.2 mass% | 90.1% | 86.1% | 2 days |

As shown in Table 7, when the carbon-coating amount was 0.3 mass% or more, a hydrophobic film on a surface was sufficient to suppress elution amount of doped Li and to suppress the gas generation in slurry. Moreover, when the carbon-coating amount was 0.3 mass% or more, an electric conductivity film on the surface was sufficient, resulting in improving a capacity retention rate of first time efficiency at 300 cycles.

### (Example 8-1 to Example 8-7)

Next, secondary batteries were produced and each evaluation was performed under the same conditions as in Example 1-1, except that intensity ratios ID/IG, IG'/IG, and ISi/IG in Raman spectrometry in negative electrode active material particles were adjusted. These peak intensity ratios were adjustable according to conditions at thermal CVD (temperature, pressure, and gas flow rate). Results of evaluations of Example 1-1, Example 8-1 to Example 8-7 are shown in Table 8.

**[Table 8]**

| SiOx x=1 D50=8.9µm, Li₂SiO₃, Ib/Ia=17.2, Ic/Ia=0, Id/Ia=0, Li₂SiO₃, Half-value width=1.46° , | | | | | | |
|---|---|---|---|---|---|---|
| Ie/If=0.09, If/Ig=0.25, SiOx ratio 20 mass%, Carbon-coating amount 3 mass% | | | | | | |
| Modification method: Redox method | | | | | | |
| Table 8 | ID/IG | IG'/IG | ISi/IG | 20 mass% 1.2V First-time efficiency | 300 Cycle retention rate | Gas generation |
| Example 1-1 | 0.961 | 0.03 | 0.313 | 92.5% | 87.3% | > 4 days |
| Example 8-1 | 0.826 | 0.02 | 0.619 | 92.4% | 87.2% | > 4 days |
| Example 8-2 | 0.410 | 0.03 | 0.410 | 92.3% | 87.2% | > 4 days |
| Example 8-3 | 0.570 | 0.04 | 0.530 | 92.3% | 87.1% | > 4 days |
| Example 8-4 | 0.620 | 0.03 | 0.570 | 92.2% | 87.1% | > 4 days |
| Example 8-5 | 0.880 | 0.02 | 0.780 | 92.2% | 87.0% | > 4 days |
| Example 8-6 | 0.980 | 0.02 | 0.950 | 92.1% | 87.0% | > 4 days |
| Example 8-7 | 1.060 | 0.02 | 1.100 | 92.1% | 87.0% | > 4 days |

As shown in Table 8, the intensity ratio ID/IG was preferably in a range of 0.4 to 1.1. Within this range, a sp3 component was not too much, and thus electric conductivity of a carbon film is good and excellent battery characteristics were obtainable. Moreover, IG'/IG was preferably 0.05 or less. The IG'/IG having 0.05 made a side reaction during charging suppressed. As a result, the excellent battery characteristics were obtainable. Furthermore, ISi/IG was preferably 1.0 or less. When the ISi/IG exceeded 1.1, an exposed surface not covered by carbon film was increased, which caused gas generation in slurry, resulting in a slight decrease in battery characteristics.

### (Example 9-1 to Example 9-7)

Next, secondary batteries were produced and each evaluation was performed under the same conditions as in Example 1-1, except that D10 (10 % particle size in a cumulative volume standard) and D50 (median diameter) of silicon compound particles were changed. Results of evaluations of Example 1-1, Example 9-1 to Example 9-7 are shown in Table 9.

**[Table 9]**

| SiOx x=1 Li₂SiO₃, Ib/Ia=17.2, Ic/Ia=0, Id/Ia=0, Li₂SiO₃, Half-value width=1.46° , | | | | | | |
|---|---|---|---|---|---|---|
| Ie/If=0.09, If/Ig=0.25, SiOx ratio 20 mass%, Carbon-coating amount 3 mass% | | | | | | |
| Modification method: Redox method | | | | | | |
| Table 9 | D10 µm | D50 µm | D10/D50 | 20 mass% 1.2V First-time efficiency | 300 Cycle retention rate | Gas generation |
| Example 1-1 | 6.3 | 8.9 | 0.7 | 92.5% | 87.3% | > 4 days |
| Example 9-1 | 0.4 | 0.5 | 0.8 | 92.4% | 87.0% | > 4 days |
| Example 9-2 | 2 | 3 | 0.7 | 92.8% | 87.1% | > 4 days |
| Example 9-3 | 4.6 | 6.5 | 0.7 | 92.7% | 87.2% | > 4 days |
| Example 9-4 | 7.5 | 10 | 0.8 | 92.4% | 87.4% | > 4 days |
| Example 9-5 | 9.4 | 13 | 0.7 | 92.3% | 87.5% | > 4 days |
| Example 9-6 | 11.2 | 15 | 0.7 | 92.3% | 87.6% | > 4 days |
| Example 9-7 | 15.6 | 20 | 0.8 | 92.1% | 87.8% | > 4 days |

Initial efficiency and retention rate were further improved when the median diameter of the silicon compound particles was 0.5 um or more, particularly 3 um or more. This is considered that a surface area per mass of the silicon compound particles was not too large, thus suppressing a side reaction. On the other hand, when the median diameter was 20 um or smaller, the particles were less likely to crack during charging, and SEI (solid electrolyte interface) caused by a newly formed surface was less likely to be generated during charging or discharging, thus a loss of reversible Li was reducible. Moreover, when the median diameter of the silicon compound particles was 20 um or smaller, an amount of expansion of the silicon compound particles during charging was not too large, and a physical and electrical breakdown of the negative electrode active material layer due to expansion was preventable. In addition, D10 was preferably 2 um or more and 16 um or less.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode active material for a non-aqueous electrolyte secondary battery containing negative electrode active material particles in which the negative electrode active material particles comprise particles of a silicon compound (SiOₓ: 0.5≤x≤1.6), wherein
the negative electrode active material particles are at least partially coated with carbon material,
the negative electrode active material particles contain Li in which content of the Li relative to the negative electrode active material particles is 9.7 mass% or more or less than 13.2 mass%,
at least part of the Li is present as Li₂SiO₃, and when the negative electrode active material particles are measured by X-ray diffraction using Cu-Kα rays, an intensity Ia of a peak around 2θ=47.5° attributable to Si obtained by the X-ray diffraction and a peak intensity Ib of a peak around 2θ=18.7° attributable to Li₂SiO₃ obtained by the X-ray diffraction satisfy 1≤Ib/Ia≤18.

2. The negative electrode active material for a non-aqueous electrolyte secondary battery according to claim 1, wherein
the negative electrode active material particles do not contain crystalline Li₂CO₃ and LiOH·H₂O on an outermost surface.

3. The negative electrode active material for a non-aqueous electrolyte secondary battery according to claim 1, wherein
the negative electrode active material particles contain at least any one of crystalline Li₂CO₃ and LiOH·H₂O on the outermost surface, and
when the negative electrode active material particles are measured by X-ray diffraction using Cu-Kα rays, a peak intensity Ic around 2θ=21° attributable to Li₂CO₃ obtained by the X-ray diffraction satisfies 0≤Ic/Ia≤10 and a peak intensity Id around 2θ=32° attributable to LiOH·H₂O obtained by the X-ray diffraction satisfies 0≤Id/Ia≤20.

4. The negative electrode active material for a non-aqueous electrolyte secondary battery according to any one of claims 1 to 3, wherein
when the negative electrode active material particles are measured by X-ray diffraction using Cu-Kα rays, a crystallite size attributable to a Si(220) crystal face obtained by the X-ray diffraction is 5 nm or less.

5. The negative electrode active material for a non-aqueous electrolyte secondary battery according to any one of claims 1 to 4, wherein
when the negative electrode active material particles are measured by X-ray diffraction using Cu-Kα rays, a peak of a peak around 2θ=18.7° attributable to Li₂SiO₃ obtained by the X-ray diffraction has a half-value width of 0.5° or more and 3.0° or less.

6. The negative electrode active material for a non-aqueous electrolyte secondary battery according to any one of claims 1 to 5, wherein
the negative electrode active material particles have at least one or more peaks in at least one region given as chemical shift values of a region of -80 ppm or more and less than -70 ppm, a region of -70 ppm or more and less than -60 ppm, and a region of -60 ppm or more and less than -30 ppm, which are obtained from a ²⁹Si-MAS-NMR spectrum of the negative electrode active material particles.

7. The negative electrode active material for a non-aqueous electrolyte secondary battery according to any one of claims 1 to 6, wherein
peak intensity ratios Ie/Ig and If/Ig obtained from the ²⁹Si-MAS-NMR spectrum of the negative electrode active material particles are 0≤Ie/Ig≤0.23 and 0≤If/Ig≤1.1, where
Ie represents a peak intensity of the peak obtained as the chemical shift value in the region of -60 ppm or more and less than -30 ppm,
If represents a peak intensity of the peak obtained as the chemical shift value in the region of -70 ppm or more and less than -60 ppm, and
Ig represents a peak intensity of the peak obtained as the chemical shift value in the region of -80 ppm or more and less than -70 ppm.

8. The negative electrode active material for a non-aqueous electrolyte secondary battery according to any one of claims 1 to 7, wherein
the negative electrode active material particles are carbon-coated in an amount of 0.3 mass% or more and 10 mass% or less relative to a total of the silicon compound particles and a carbon coating layer.

9. The negative electrode active material for a non-aqueous electrolyte secondary battery according to any one of claims 1 to 8, wherein
an intensity ratio ID/IG of a D band and a G band in Raman spectrometry of the negative electrode active material is 0.4≤ID/IG≤1.1.

10. The negative electrode active material for a non-aqueous electrolyte secondary battery according to any one of claims 1 to 9, wherein
an intensity ratio IG'/IG of a G' band and a G band in Raman spectrometry of the negative electrode active material is 0≤IG'/IG≤0.05.

11. The negative electrode active material for a non-aqueous electrolyte secondary battery according to any one of claims 1 to 10, wherein
an intensity ratio ISi/IG of a peak intensity of Si and a G band in Raman spectrometry of the negative electrode active material is 0≤ISi/IG≤1.0.

12. The negative electrode active material for a non-aqueous electrolyte secondary battery according to any one of claims 1 to 11, wherein
the silicon compound particles have a median diameter of 0.5 um or more and 20 um or less.

13. A non-aqueous electrolyte secondary battery comprising a negative electrode active material for a non-aqueous electrolyte secondary battery according to any one of claims 1 to 12.

14. A method for producing a negative electrode active material for a non-aqueous electrolyte secondary battery containing negative electrode active material particles, the method comprising steps of:
preparing silicon compound particles containing a silicon compound (SiOₓ: 0.5≤x≤1.6);
coating at least part of the silicon compound particles with carbon material;
inserting Li into the silicon compound particles to produce Li₂SiO₃ so as to make a content of the Li 9.7 mass% or more and less than 13.2 mass% relative to the negative electrode active material particles; and
further selecting, from the prepared negative electrode active material particles, in which the negative electrode active material particles are measured by X-ray diffraction using Cu-Kα rays, such negative electrode active material particles satisfying 1≤Ib/Ia≤18, where
Ia represents an intensity of a peak around 2θ=47.5° attributable to Si obtained by the X-ray diffraction, and
Ib represents a peak intensity of a peak around 2θ=18.7° attributable to Li₂SiO₃ obtained by the X-ray diffraction.
